# EUROPÄISCHE PATENTSCHRIFT

(11) **EP 3 517 193 B1**
(45) Veröffentlichungstag und Bekanntmachung des Hinweises auf die Patenterteilung: **30.03.2022**
(21) Anmeldenummer: 19158459.8
(22) Anmeldetag: 06.09.2011
(51) Int. Cl.: B01D 29/21, B01D 46/52

(54) **FILTERELEMENT**
FILTER ELEMENT
ÉLÉMENT FILTRANT

(30) Priorität: 15.09.2010 DE 102010045500
(43) Veröffentlichungstag der Anmeldung: 31.07.2019
(62) Teilanmeldung aus: 11757774.2
(73) Patentinhaber: RT-Filtertechnik Gmbh, 88048 Friedrichshafen (DE)
(72) Erfinder: STEHLE, Gerhard, 78467 Konstanz (DE); SCHÖNFELD, Dirk, 99510 Schwabsdorf (DE)
(74) Vertreter: Bartels und Partner, Patentanwälte

(56) Entgegenhaltungen:
- DE-A1- 19 931 307
- DE-A1-102004 026 862
- DE-A1-102008 058 356
- DE-U1-202009 000 969
- US-A- 4 746 432
- US-A1- 2007 157 589

## Beschreibung

Die Erfindung betrifft ein Filterelement mit den Merkmalen im Oberbegriff von Patentanspruch 1.

Filterelemente dieser Art sind handelsüblich. In Verbindung mit Fluidanlagen verschiedenster Art finden solche Filterelemente verbreitet Anwendung für die Filterung von Verfahrensflüssigkeiten, Druckflüssigkeiten, wie Hydrauliköle, flüssige Kraft- und Schmierstoffe, zur Aufbereitung flüssiger Medien und dergleichen. In vielen Fällen steht bei Fluidanlagen, bei denen die Filterelemente zum Einsatz kommen, nur ein begrenzter Nutzraum für Einbau oder Anbau der Anlageteile zur Verfügung, die die betreffenden filterkerzenartigen Filterelemente enthalten. Andererseits ist, um entsprechend große Filterströme filtrieren zu können, eine ausreichende Größe der von dem Filterelement zur Verfügung gestellten Filterfläche erforderlich.

Zur Bereitstellung einer ausreichend großen Filterfläche weisen die bekannten Filterelemente, wie sie auf dem Markt frei erhältlich sind, eine typischerweise aus mehreren Lagen verschiedener Filtermaterialien zusammengesetzte, zickzackförmig gefaltete oder plissierte Filterbahn auf, welche um ein massives, im Inneren des Filterelements angeordnetes, mit Durchlässen versehenes Stützrohr herumgelegt ist. Bei der Fertigung wird die Filterbahn, auch Filterflächenteil genannt, in Bahnlängsrichtung durch eine Schneideinheit hindurchgeführt, in welcher die Filterbahn randseitig nach Maß zugeschnitten wird, bevor sie zu einer Faltmaschine weiterbewegt wird, in der die Zickzack-Form oder das Plissee ausgebildet wird. Im weiteren Verlauf der Fertigung wird sodann die zugeschnittene Filterbahn in Bahnabschnitte aufgetrennt, welche dann zu einem Rohrkörper geformt werden und insoweit das Filterelement ausbilden.

DE 10 2004 026 862 A1 betrifft ein Filterelement, das zur Filterung von Fluiden in einem Filtergehäuse aufnehmbar und in der Art einer sich entlang einer Längsachse erstreckenden Filterkerze in Form eines Körpers ausgebildet ist, bei dem ein innerer Fluidraum von Filtermaterial umgeben ist. Um den inneren Fluidraum von einem äußeren Fluidraum innerhalb des Filtergehäuses zu trennen, besitzt der Körper des Filterelementes einen Querschnitt in Form eines von der Kreisform abweichenden Gleichdickes. Mehrere gleichdicke Filterelemente sind jeweils in solcher Lageausrichtung in das Filtergehäuse eingebaut, dass sie mit dem Zentralbereich ihrer mit dem größeren Krümmungsradius kreisbogenförmig gewölbten Außenseite zu der Wand des Filtergehäuses nächstgelegen sind.

DE 20 2009 000 969 U1 offenbart ein gattungsgemäßes Filterelement mit zumindest einem inneren und einem äußeren Mantelkörper, von denen zumindest ein Mantelkörper eine von einer Kreisform abweichende Querschnittsform aufweist und die einander zugewandt Anlageflächen für die Anlage im Wesentlichen aller Filterfalten einer plissierten Filterbahn als Teil des Filterelements aufweisen, wobei die Filterfalten von der Faltenhöhe her in einzelne Gruppen mit jeweils mehreren abschnittsweise nebeneinanderliegenden Filterfalten jeweils einer gemeinsamen Faltenhöhe unterteilt sind.

Weitere Filterelemente gehen aus der US 2007/0157589 A1, der DE 199 31 307 A1, der US 4 476 432 und der DE 10 2008 058 356 A1 hervor.

Im Hinblick auf diesen Stand der Technik stellt sich die Erfindung die Aufgabe, das Verhältnis von Filterfläche zu benötigtem Einbauraum weiter zu verbessern, so dass Anlageteile, die für die Filterung betreffender Fluide vorgesehen sind, besonders platzsparend ausgebildet werden können und sogleich die größtmögliche Filterfläche zur Verfügung steht.

Diese Aufgabe wird gelöst durch ein Filterelement mit den Merkmalen des Patentanspruchs 1 in seiner Gesamtheit. Ein erfindungsgemäßes Filterelement zeichnet sich dadurch aus, dass zwischen zwei benachbarten Filterfalten unterschiedlicher Gruppen Filterfalten mindestens einer weiteren dritten Gruppe angeordnet ist; dass die der dritten Gruppe zugeordneten Filterfalten in der Art einer Kurvenbildung voneinander verschiedene Faltenhöhen, die einen Übergang zwischen den Faltenhöhen der beiden benachbarten Gruppen herstellt, aufweisen; und dass entweder der äußere Mantelkörper eine kreisförmige Querschnittsform und der innere Mantelkörper eine durch ein konvexes Polygon gegebene Querschnittsform aufweist, oder, umgekehrt, der innere Mantelkörper eine kreisförmige Querschnittsform und der äußere Mantelkörper eine durch ein konvexes Polygon gegebene Querschnittsform aufweist.

Vorteilhafte Ausgestaltungen des erfindungsgemäßen Filterelements sind Gegenstände der Unteransprüche.

Dadurch, dass zumindest ein Teil der Filterfalten eine voneinander verschiedene Faltenhöhe aufweist und zumindest eine Anlagefläche eine von einer zylindrischen Bauform abweichende Form aufweist, steht eine optimierte, insbesondere vergrößerte, Filterfläche bei verbesserter Bauraumausnutzung zur Verfügung. Insbesondere lässt sich das erfindungsgemäße Filterelement in nicht symmetrischen Bauraumgeometrien unter Bereitstellung einer größtmöglichen Filterfläche anordnen. Vorteilhafterweise sind die Mantelkörper entsprechend einem Einbauraum ausgebildet. Erfindungsgemäß werden die Filterfalten derart ausgebildet und angeordnet, dass der Abstand, mit anderen Worten der freie Raum, zwischen innerem und äußerem Mantelkörper maximal genutzt wird, anders ausgedrückt erstrecken sich die Filterfalten entlang des jeweils verfügbaren Filterraums zwischen äußerem und innerem Mantelkörper.

Typischerweise sind die Filterfalten unmittelbar aufeinanderfolgend und/oder parallel zueinander verlaufend angeordnet. In dieser Ausgestaltung des erfindungsgemäßen Filterelements wird der Filterraum bestmöglich zur Ausbildung von Filterfläche genutzt. Die Filterfalten verlaufen in der Regel senkrecht zur Verlaufsrichtung der typischerweise rechteckförmigen Filterbahn. Die rechteckförmige Filterbahn wird zur Ausbildung des Filterelements mantelförmig geschlossen. Hierbei ist die Filterbahn bevorzugt an ihren Filterbahnenden verbunden zu einem rohrförmigen Filtermantel. Die Faltengeometrie sowie die Geometrie des Filterelements können in Abhängigkeit des jeweiligen Einbauraums, der Anströmverhältnisse, insbesondere der spezifischen Flächenbelastung, und/oder der Filtergröße variiert und ausgewählt werden. Zweckmäßigerweise ist die Filterbahn aus mehreren, mindestens zwei Lagen von Filtermaterial zusammengesetzt.

Die Faltenhöhe der entsprechenden der dritten Gruppe zugeordneten Filterfalten ist einem wellenförmigen und/oder sinusförmigen Verlauf folgend ausgebildet. Die Wellen- oder Sinusform ist nur auf der Außenseite oder der Innenseite der Filterbahn bzw. auf dem jeweiligen Mantelkörper ausgebildet.

Durch Variieren der inneren An- bzw. äußeren Abströmquerschnitte werden die Strömungsverhältnisse beim An- bzw. Abströmen des zu filtrierenden Fluids optimiert. Dies führt zu einer Reduzierung des k-Wertes bzw. des Druckverlustes im System. Filterfalten mit kleinerer Faltenhöhe sind in der Regel mechanisch stabiler und führen zu einer Stabilisierung bzw. Erhöhung der mechanischen Stabilität des gesamten Filterflächenteils. Filterfalten mit größerer Faltenhöhe haben, da zu ihrer Ausbildung eine größere Bahnfläche von Nöten ist, eine größere Filterfläche und somit eine erhöhte Schmutzaufnahmekapazität. Auf diese Weise wird die Abscheideleistung, d. h., die □-Werte verbessert. Durch die Kombination von Filterfalten mit kleinerer und größerer Faltenhöhe wird gleichzeitig eine mechanische Stabilisierung und eine verbesserte Schmutzaufnahmekapazität bzw. Abscheideleistung erreicht.

In einer bevorzugten Ausführungsform des erfindungsgemäßen Filterelements ist die Querschnittsform des inneren oder des äußeren Mantelkörpers durch Mantelkörpers ein Reuleaux-Polygon bzw. ein Gleichdick gegeben. Charakteristische Eigenschaft eines Reuleaux-Polygons ist es, konstante Breite zu besitzen, unabhängig von der Richtung, in welcher man diese misst. Ein derartig ausgestaltetes Filterelement lässt sich in einen Einbauraum mit größtmöglichem Flächenquerschnitt einbauen. Die von der Kreisform abweichende Form eines Reuleaux-Polygons bzw. Gleichdickes ermöglicht es, in einem gegebenen Einbauraum eine größere Filterfläche unterzubringen, als dies bei einem Filterelement kreiszylindrischer Querschnittsform möglich wäre. Die von der Kreisform abweichende Form des Gleichdickes gestattet es, das Filterelement in Anpassung an die gegebenen Grenzen des Einbauraumes platzsparend so zu integrieren, dass im gegebenen Einbauraum ein größerer Umfang des Filterelements und damit eine größere Filterfläche zur Verfügung steht, als dies bei Einbau eines zylindrischen Filterelements am gleichen Einbauort möglich wäre.

Vorteilhafterweise sind die Filterfalten entlang der Filterbahn einem periodischen Verlauf folgend, vorzugsweise mit einer Periode von 15 bis 20 Filterfalten, angeordnet. Hieraus ergibt sich der Vorteil räumlich homogener Eigenschaften des Filterelements hinsichtlich Form- und Druckstabilität, Filtrationsleistung und/oder An- bzw. Abströmcharakteristika. Die minimale und die maximale Faltenhöhe bzw. Faltentiefe wird entsprechend des Einsatzzweckes und des Einbauraumes gewählt. Zweckmäßigerweise wird der Übergang von minimaler zu maximaler Faltenhöhe über den Verlauf von vier bis fünf nebeneinander angeordneter bzw. liegender Falten der dritten Gruppe verlaufend ausgebildet, um scharfe Übergänge zwischen erster und zweiter Gruppe zu vermeiden. Insbesondere charakteristisch ist, dass die Filterfaltenhöhe zumindest einer ersten und zumindest einer zweiten Gruppe an Filterfalten jeweils gleich hoch ist und insoweit gleiche Faltenhöhen über den Umfang des Filterelements verteilt mehrfach vorkommen. Unabhängig von der Anzahl möglicher Filterfalten wird jedenfalls immer eine solche Periode von Filterfalten gewählt, die dem zur Verfügung stehenden Filterraum angepasst ist. Die dahingehende Anpassung gilt selbstredend auch für die Anzahl nebeneinanderliegender Falten, um scharfe Übergänge zu vermeiden.

Bevorzugt sind die Filterfalten gleichförmig ausgebildet und/oder gleichmäßig angeordnet. Neben einer einfachen Herstellung des Filterelements werden homogene Eigenschaften des Filterelements erreicht. Insbesondere kann die spezifische Flächenbelastung auf der Anströmseite des Filterelements homogen ausgebildet werden. Weiter ist es vorteilhaft, dass die Filterfalten im Querschnitt zumindest teilweise zickzackförmig und/oder sichelförmig ausgebildet sind. Die Herstellung einer zickzackförmigen Filterfalte ist faltungstechnisch besonders einfach. Auch eine Ausführung als Trapezfalte ist denkbar und vorteilhaft. Sternförmig plissierte Falten sind besonders günstig hinsichtlich der Anströmung von zu reinigendem Fluid. Wellenförmig ausgebildete Filterfalten können vorzugsweise als sogenannte Sinusfalten ausgebildet sein. Sichelförmig ausgestaltete Falten zeichnen sich dadurch aus, dass ihre freien Enden in Bezug zum entgegengesetzten Filterbahnende versetzt angeordnet sind. Bei einer derartigen Ausgestaltung steht eine noch größere Filterfläche im Einbauraum zur Verfügung.

Weitere Vorteile und Merkmale der Erfindung ergeben sich aus den Figuren und der nachfolgenden Beschreibung der Zeichnung. Die in den Figuren gezeigten Merkmale sind rein schematisch und nicht maßstäblich zu verstehen. Es zeigen:
- Fig. 1a: eine Draufsicht eines Filterelements gemäß dem Stand der Technik;
- Fig. 1b: eine Seitenansicht einer auseinandergelegten Filterbahn gemäß dem Stand der Technik;
- Fig. 2a: eine Draufsicht eines erfindungsgemäßen Filterelements;
- Fig. 2b: eine Seitenansicht der auseinandergelegten Filterbahn aus Fig. 2a;
- Fig. 3a: eine Seitenansicht einer weiteren Filterbahn eines weiteren erfindungsgemäßen Filterelements im auseinandergelegten Zustand;
- Fig. 3b: eine perspektivische Ansicht der weiteren Filterbahn aus Fig. 3a;
- Fig. 4: eine Seitenansicht einer weiteren Filterbahn eines weiteren Filterelements;
- Fig. 5a: eine Draufsicht auf ein teilweise geöffnet dargestelltes Filtergehäuse mit einem darin angeordneten erfindungsgemäßen Filterelement;
- Fig. 5b: eine perspektivische Ansicht des teilweise aufgeschnitten dargestellten Filtergehäuses aus Fig. 5a;
- Fig. 6a-6d: jeweils eine schematische Darstellung eines Reuleaux-Polygons.

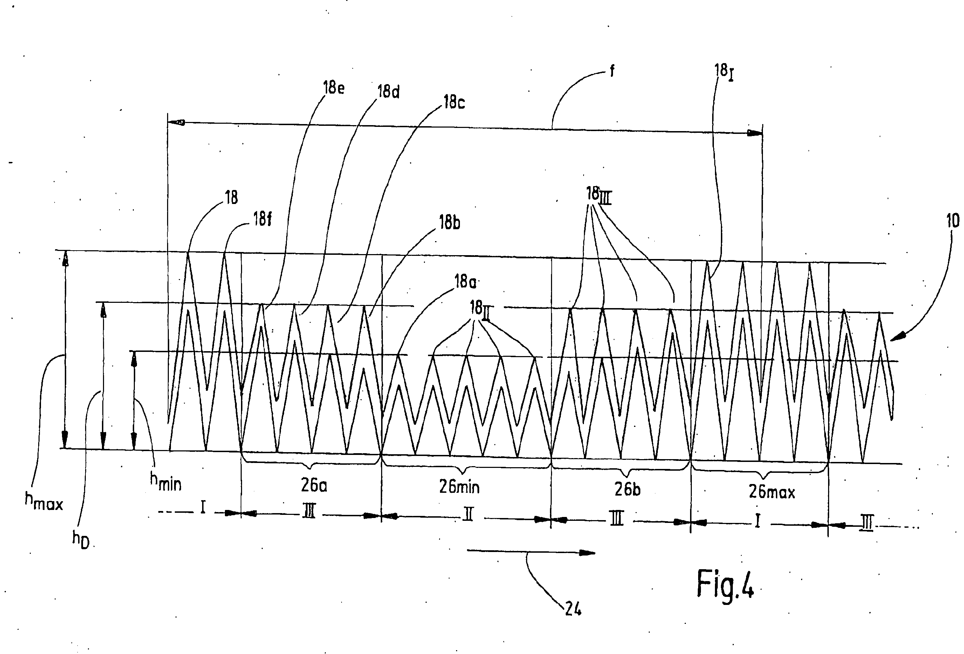

Die Ausführungsform der Fig. 4 dient lediglich der Erläuterung des Hintergrundes der Erfindung und ist nicht Gegenstand eines Patentanspruchs.

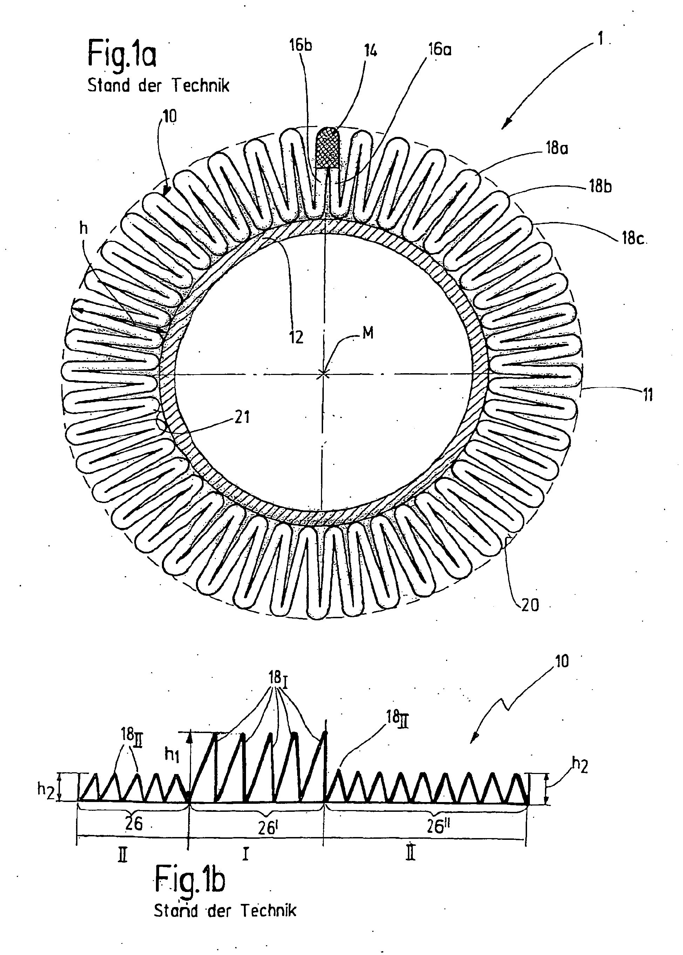

Fig. 1 a zeigt ein Filterelement 1 gemäß dem Stand der Technik mit einer gefalteten Filterbahn 10, welche zu einem runden Rohrkörper geformt um einen fluiddurchlässigen inneren Mantelkörper 12, ausgebildet als Stützrohr, herumgelegt ist. Außenliegend ist ein äußerer Mantelkörper 11, mit gestrichelter Linie angedeutet, angeordnet. Beide Mantelkörper 11, 12 weisen jeweils einen kreisförmigen Querschnitt auf. Die kreisförmige Querschnittsform von äußerem und innerem Mantelkörper 11, 12 weisen einen gemeinsamen Mittelpunkt M auf, anders ausgedrückt sind innerer Mantelkörper 12 und äußerer Mantelkörper 11 konzentrisch zueinander angeordnet. Im Filtrationsbetrieb wird das Filterelement 1 bzw. dessen Filterfalten 18a-18cvon außen nach innen, d. h. zum Mittelpunkt M hin, durchströmt.

Ein Verbindungsbereich 14 der Filterbahn 10 ist an den den Verschluss des Rohrkörpers bildenden Filterbahnenden 16a, 16b gebildet. Der Verbindungsbereich 14 kann durch Verschweißen oder Verkleben der an den Filterbahnenden 16a, 16b aneinanderliegenden Längsränder gebildet sein.

In der plissierten Filterbahn 10 im Wesentlichen gleichförmig ausgebildete Filterfalten 18a-18c weisen jeweils die gleiche Filterhöhe h auf und liegen jeweils sowohl an einer vom äußeren Mantelkörper 11 festgelegten äußeren Anlagefläche 20 und einer vom inneren Mantelkörper 12 festgelegten inneren Anlagefläche 21 an. Damit einher geht, dass die Filterhöhe h der Filterfalten 18a-18c mindestens dem radialen Abstand zwischen innerer 21 und äußerer Anlagefläche 20 bzw. zwischen innerem 12 und äußerem Mantelkörper 11 entspricht.

Fig. 1b zeigt in Seitenansicht eine Filterbahn 10 eines im Übrigen nicht gezeigten weiteren Filterelements gemäß dem Stand der Technik. Die entlang der Filterbahn 10 nebeneinander angeordneten Filterfalten 18_{I}, 18_{II} sind in zwei Gruppen I, II unterteilt. Die Filterfalten 18_{I} der ersten Gruppe I weisen eine erste Filterhöhe h₁ auf und sind im mittleren Abschnitt 26' der Filterbahn 10 nebeneinanderliegend angeordnet. Die Filterfalten 18_{II} der zweiten Gruppe II weisen jeweils eine zweite Faltenhöhe h₂ auf und sind im linken Abschnitt 26 und im rechten Abschnitt 26" der Filterbahn 10 jeweils nebeneinanderliegend angeordnet. Die zweite Faltenhöhe h₂ ist kleiner als die erste Faltenhöhe h₁, so dass am Übergang vom linken 26 zum mittleren Abschnitt 26' und vom mittleren 26' zum rechten Abschnitt 26" jeweils ein scharfer Übergang zwischen den dort benachbart zueinander angeordneten Filterfalten 18_{I} 18_{II} ausgebildet ist. An den linken 26 und/oder der rechten Abschnitt 26" der Filterbahn 10 können sich weitere Filterfalten 18_{I} 18_{II} der beiden Gruppen I, II mit stufenweise zwischen erster h₁ und zweiter Faltenhöhe h₂ wechselnder Faltenhöhe anschließen.

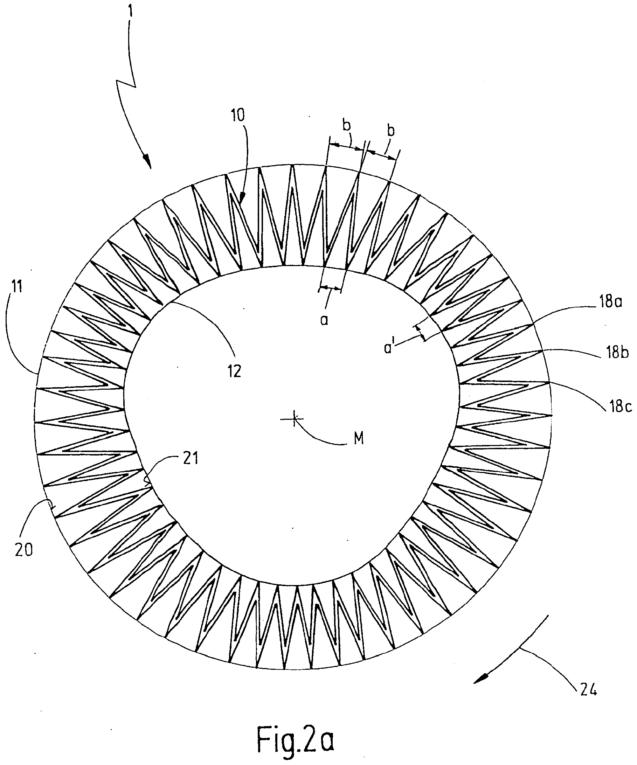

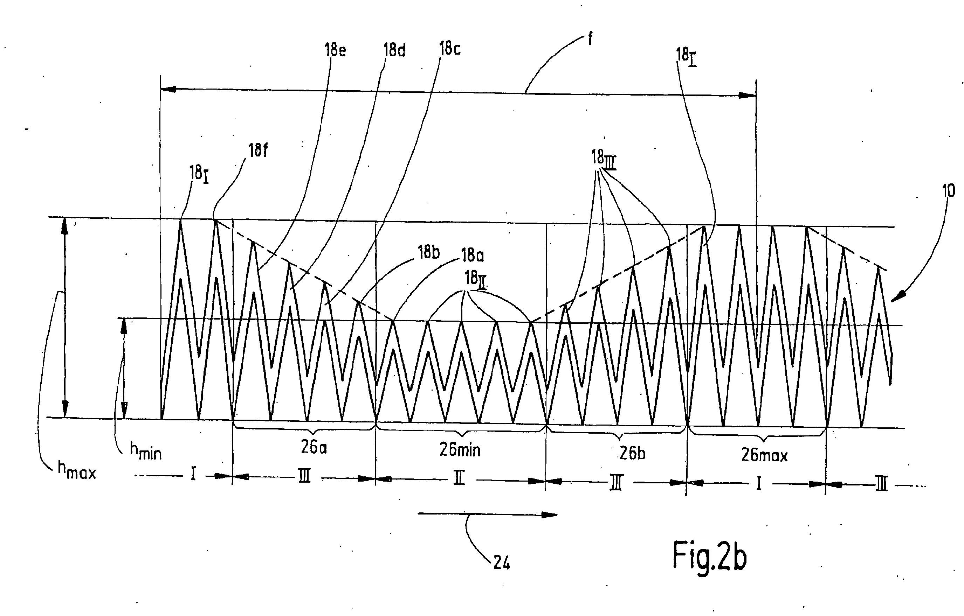

Fig. 2a und 2b zeigen ein erfindungsgemäßes Filterelement 1 umfassend eine Filterbahn 10 mit Filterfalten 18a-18f, 18_{I}-18_{III}, welche eine kreisförmige Querschnittsform des äußeren Mantelkörpers 11 und eine von einer Kreisform abweichende Querschnittsform des inneren Mantelkörpers 12 aufgrund unterschiedlicher Filterhöhen hₘᵢₙ, hₘₐₓ festlegen. Die Filterfalten 18a-18f, 18_{I}-18_{III} sind entlang einer Verlaufsrichtung 24 der Filterbahn 10 unmittelbar aufeinanderfolgend angeordnet mit konstantem äußeren Faltenabstand b. Der innere Faltenabstand entlang des inneren Mantelkörpers 12 variiert zwischen dem minimalen inneren Faltenabstand a' und einem maximalen inneren Faltenabstand a. Die Filterfalten 18f, 18_{I} der ersten Gruppe I mit maximaler Faltenhöhe hₘₐₓ weisen den maximalen inneren Faltenabstand a, die Filterfalten 18a, 18_{II} der zweiten Gruppe II mit minimaler Faltenhöhe hₘᵢₙ den minimalen inneren Faltenabstand a' auf. Sämtliche durch die Filterfalten 18a-18f, 18_{I}-18_{III} definierte Filterberge stehen außen und innen vor und liegen jeweils an einer Anlagefläche 20, 21 am jeweiligen Mantelkörper 11, 12 an, wobei die äußere Anlagefläche 20 eine zylindrische Form und die innere Anlagefläche 21 eine von der zylindrischen Form abweichende Form aufweist.

Die Filterfalten 18a-18f, 18_{I}-18_{III} sind entlang der Verlaufsrichtung 24 der Filterbahn 10 periodisch mit einer Periode f angeordnet und ausgebildet. Im vorliegenden Beispiel umfasst die Periode f 17 Filterfalten. In einem ersten Abschnitt 26a mit vier Filterfalten 18b-18e der dritten Gruppe III nimmt die Faltenhöhe kontinuierlich vom Maximalwert hₘₐₓ der ersten Gruppe I bzw. der Faltenhöhe hₘₐₓ entsprechenden Filterfalten 18f, 18_{I} zum Minimalwert hₘᵢₙ der zweiten Gruppe II bzw. der Faltenhöhe hₘᵢₙ der entsprechenden Filterfalten 18a, 18_{II} ab. Im sich anschließenden zweiten Abschnitt 26ₘᵢₙ sind fünf Filterfalten 18a, 18_{II} der zweiten Gruppe II mit minimaler Faltenhöhe hₘᵢₙ angeordnet. Es schließt sich ein dritter Abschnitt 26b mit vier Filterfalten 18_{III} der dritten Gruppe III mit kontinuierlich und einem linearen Verlauf folgend vom Minimalwert hₘᵢₙ zum Maximalwert hₘₐₓ zunehmender Filterhöhe an. Den Maximalwert hₘₐₓ der Faltenhöhe weisen wiederum vier Filterfalten 18_{I} der ersten Gruppe I in einem vierten Abschnitt 26ₘₐₓ auf.

Die gezeigten und beschriebenen Parameter, die Filterhöhe h mit Minimalwert hₘᵢₙ und Maximalwert hₘₐₓ, die Periode f, der minimale innere Faltenabstand a', der maximale innere Faltenabstand a sowie der äußere Faltenabstand b und die Gesamtzahl der Filterfalten 18a-18f, 18_{I}-18_{III} sind variabel einstellbar und entsprechend des jeweiligen Einsatzzweckes des Filterelements 1 und entsprechend des Einbauraumes optimierbar. Aus Fig. 2a ist ersichtlich, dass das Filterelement 1 in einen herkömmlichen zylindrischen Einbauraum eingesetzt werden kann, da die erfindungsgemäße Ausgestaltung lediglich am inneren Mantelkörper 12 sichtbar ist, welcher entsprechend geformt ist.

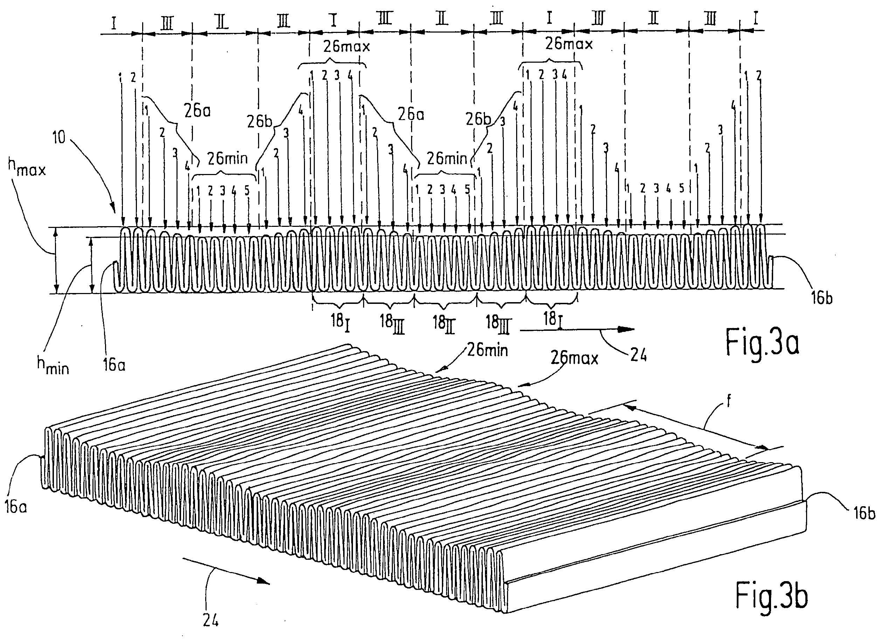

Figuren 3a und 3b zeigen eine weitere, plisseeartig gefaltete Filterbahn 10 mit zwischen einer minimalen Filterhöhe hₘᵢₙ und einer maximalen Filterhöhe hₘₐₓ variierenden Filterfalten 18a-18f, welche dicht aneinanderliegend angeordnet und in drei Gruppen I, II, III unterteilt sind. In Verlaufsrichtung 24 vom ersten Filterbahnende 16a zum zweiten Filterbahnende 16b variiert die Filterhöhe der Filterfalten 18_{I}-18_{III} mit der Periode f mit vier Filterfalten 18_{III} der dritten Gruppe III mit abnehmender Faltenhöhe im ersten Abschnitt 26a, fünf Filterfalten 18_{II} der zweiten Gruppe II mit minimaler Faltenhöhe hₘᵢₙ im zweiten Abschnitt 26ₘᵢₙ, vier Filterfalten 18_{III} der dritten Gruppe III mit zunehmender Faltenhöhe im dritten Abschnitt 26b und vier Filterfalten 18_{I} der ersten Gruppe I mit maximaler Filterhöhe hₘₐₓ im vierten Abschnitt 26ₘₐₓ. Aus Fig. 3b ist gut ersichtlich, dass zur Vermeidung von scharfen Übergängen der Übergang von minimaler Faltenhöhe hₘᵢₙ zu maximaler Faltenhöhe hₘₐₓ "sanft", anders ausgedrückt fließend oder kontinuierlich mit geringer Ab- bzw. Zunahme, ausgeführt ist.

Bei den vorstehend genannten Ausführungsbeispielen handelt es sich nur um bevorzugte Lösungsvarianten, die auch veränderbar sind, insbesondere was die Faltenanzahl und die Faltenhöhe anbelangt. Neben den erwähnten Geometrien zickzackförmig, sichelförmig, etc. können bei der Faltengeometrie auch sogenannten Schlingenfalten zum Einsatz kommen, und im übrigen lassen sich je nach Einsatzzweck die Faltengeometrien auch frei vorgeben und gestalten.

In Fig. 4 ist in Seitenansicht eine weitere Filterbahn eines weiteren Filterflächenelements, welches im Gesamten nicht gezeigt ist, dargestellt. Die Darstellung von Fig. 4 entspricht in großen Teilen der Darstellung von Fig. 2b und unterscheidet sich von dieser darin, dass die Filterfalten 18b-18e, 18_{III} der dritten Gruppe III sowohl im jeweiligen Abschnitt 26a, 26b der Filterbahn 10 die gleiche dritte Faltenhöhe h_{D} als auch insgesamt diese Faltenhöhe h_{D} aufweisen. Aus Fig. 4 ist gut ersichtlich, dass die dritte Faltenhöhe h_{D} der der dritten Gruppe III zugeordneten Filterfalten 18b-18e, 18_{III} der Mittelwert der ersten Faltenhöhe hₘₐₓ der der ersten Gruppe I zugeordneten Filterfalten 18f, 18_{I} und der zweiten Filterfaltenhöhe hₘᵢₙ der der zweiten Gruppe II zugeordneten Filterfalten 18a, 18_{II} darstellt.

Es ist jedoch auch denkbar, dass bei einer nicht gezeigten Ausführungsform die Filterfalten 18b-18e im linken Abschnitt 26a eine von der Faltenhöhe der im rechten Abschnitt 26b der angeordneten Filterfalten 18_{III} der dritten Gruppe III aufweisen. Weiter kann in einer Filterbahn 10 ein in Fig. 2b gezeigter Übergang zwischen erster Faltenhöhe hₘₐₓ und zweiter Faltenhöhe hₘᵢₙ mit der in Fig. 4 gezeigten stufenartigen abschnittsweisen Anordnung der Filterfalten 18b-18e, 18_{III} im jeweiligen Abschnitt 26a, 26b kombiniert werden. Zudem können die Filterfalten 18b-18f, 18_{III} der dritten Gruppe III im jeweiligen Abschnitt 26a, 26 die erste Faltenhöhe hₘₐₓ und/oder die zweite Faltenhöhe hₘᵢₙ unter- oder überschreiten.

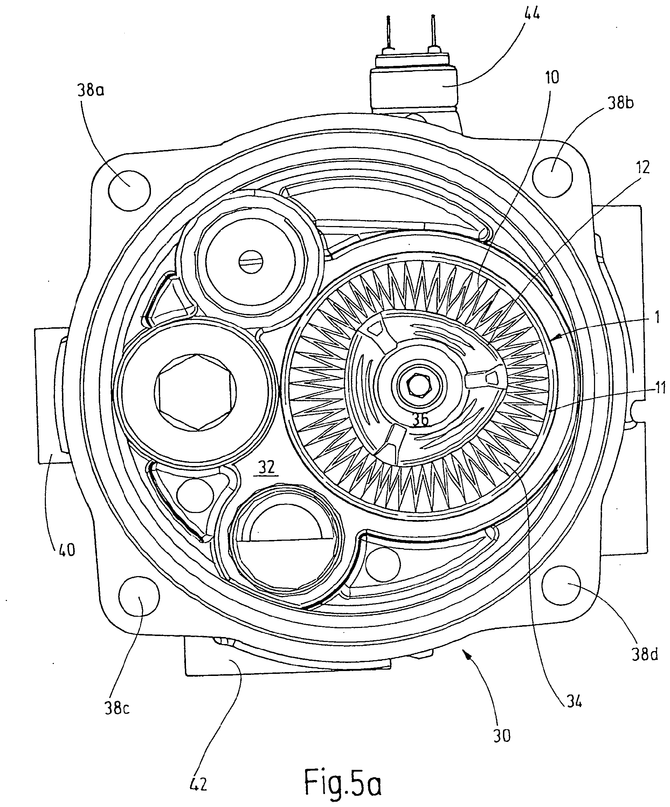

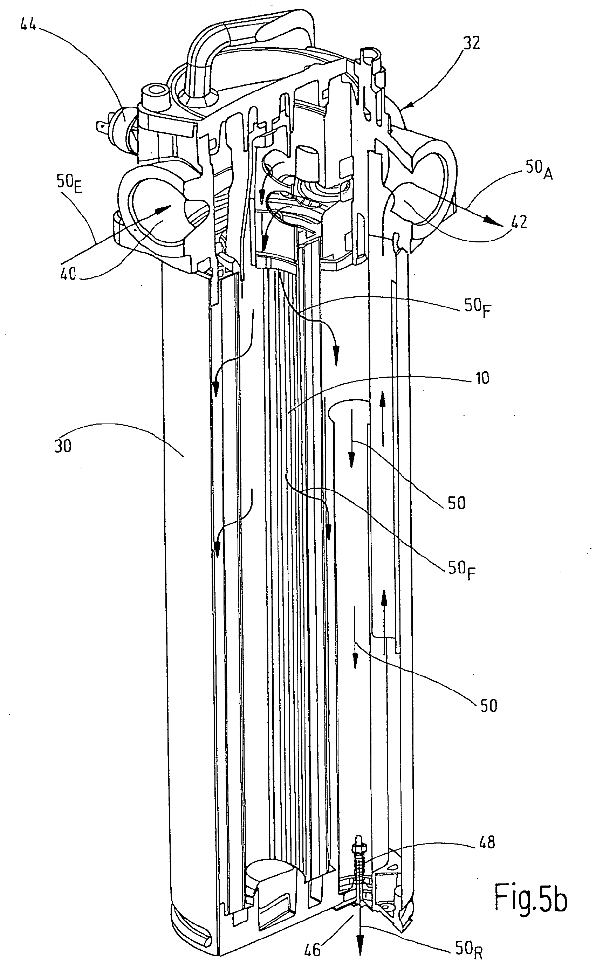

Figuren 5a und 5b zeigen ein Filtergehäuse 30, in welches das erfindungsgemäße Filterelement 1 mit der Filterbahn 10 gemäß Figuren 2a und 2b eingesetzt ist. An ein Kopfteil 32 des Filtergehäuses 30 schließt sich ein zylinderförmiger Einbauraum 34 an, in welchen das Filterelement 1 mit rohrförmigem äußerem Mantelkörper 11 eingesetzt ist. An den inneren Mantelkörper 12 (nicht gezeigt) schließt sich kopfseitig ein Niederhalter 36 mit entsprechender reuleaux-polygonalförmiger Gestalt an. Der Niederhalter 36 wird vom Hydraulikmedium durchflossen und formschlüssig in die Innenkontur der entsprechenden Elementfassung eingeführt. Die Kante des Niederhalters 36 nimmt axiale Kräfte über die Anformungen in der Elementfassung auf. Der Niederhalter 36 ist im gezeigten Beispiel für eine Durchströmrichtung von innen nach außen ausgelegt, wie mit Pfeilen 50_{E}, 50_{F}, 50 dargestellt. Am Kopfteil 32 sind Löcher 38a-38d als Handhabungs- und/oder Befestigungshilfe vorgesehen sowie ein Einlass 40 und ein Auslass 42 für zu reinigendes bzw. gereinigtes Fluid. Ein weiterer Auslass 46 ist am dem Kopfteil 32 entgegengesetzten Ende des Filtergehäuses 30 für einen Rücklauf 50_{R} angeordnet und mit einem Vorspannventil 48 versehen. Das Filterelement 1 kann wie ein herkömmliches Filterteil in das Filtergehäuse 30 eingebaut werden, beim Betrieb des dahingehend ausgestalteten Filters steht jedoch eine größere wirksame Filterfläche mit verbesserten Stabilitätseigenschaften zur Verfügung.

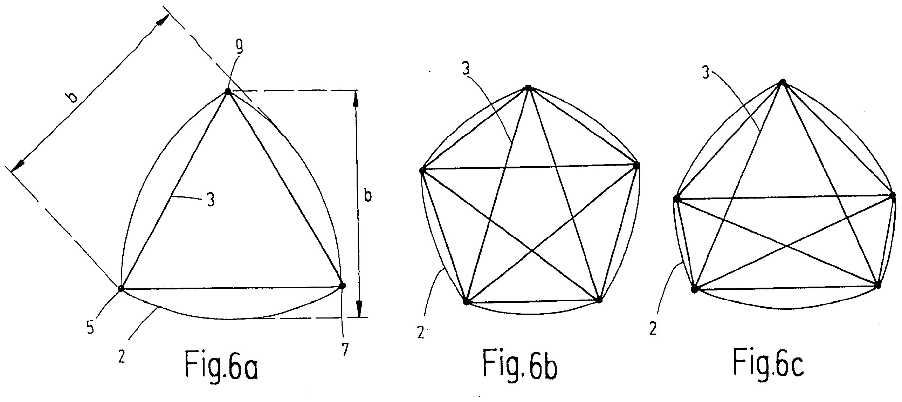

Die Figuren 6a-6d zeigen Reuleaux-Polygone bzw. Gleichdicke, deren Umrisslinie mit 2 bezeichnet ist. Allgemein hat ein Reuleaux-Polygon oder auch Bogenvieleck eine ungerade Eckenzahl und besteht aus lauter Kreisbögen mit demselben Radius. Da der Mittelpunkt jedes Kreisbogens in der genau gegenüberliegenden Ecke 5, 7, 9 des Polygons liegen muss, liegt einem Bogenvieleck stets ein - nicht notwendig regelmäßiges - Sternvieleck 3 mit lauter gleich langen Seiten zugrunde. Ein in Fig. 6a dargestelltes Reuleaux-Dreieck entsteht aus einem gleichseitigen Dreieck 3, indem man seine Kanten durch Kreisbögen mit dem Radius gleich der Kantenlänge und Mittelpunkt im gegenüberliegenden Eckpunkt ersetzt. Charakteristische Eigenschaft eines Reuleaux-Polygons ist es, konstante Breite b zu besitzen, unabhängig von der Richtung, in welche man diese misst

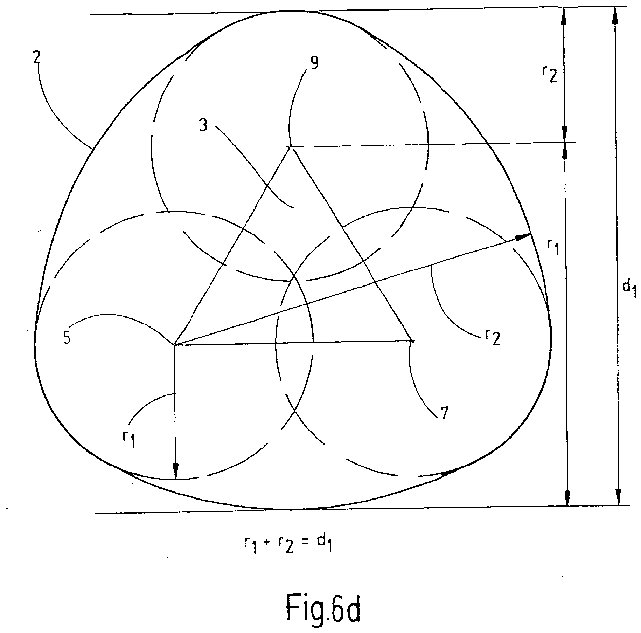

Das in Fig. 6d gezeigte Gleichdick basiert auf einem gleichseitigen Dreieck 3 mit Eckpunkten 5, 7 und 9, wobei jeder Eckpunkt 5, 7, 9 Mittelpunkt eines Kreises mit Radius r₁ und eines Kreisbogens mit dem Radius r₂ ist. Diese beiden Radien sind nur vom Eckpunkt 5 ausgehend in der Fig. 6d dargestellt. Die Größe des Radius r₂ ist im Verhältnis zum Radius r₁ so gewählt, dass der entsprechende Kreisbogen sich tangential an dem Kreis mit dem Radius r₁ anschließt und sich somit die in Fig. 6d mit 1 bezeichnete, geschlossene Umrisslinie ergibt. Der Durchmesser d₁ des so gebildeten Gleichdickes entspricht der Summe der Radien r₁ und r₂. Der Umfang des Gleichdickes, d. h., die Länge der Umrisslinie 2 ist gleich groß wie der Umfang eines Kreises mit dem Durchmesser d₁.

## Patentansprüche

1. Filterelement (1) mit zumindest einem inneren (12) und einem äußeren Mantelkörper (11), von denen zumindest ein Mantelkörper (12) eine von einer Kreisform abweichende Querschnittsform aufweist und die einander zugewandt Anlageflächen (20, 21) für die Anlage im Wesentlichen aller Filterfalten (18a-18f, 18_{I}-18_{III}) einer plissierten Filterbahn (10) als Teil des Filterelements (1) aufweisen, wobei die Filterfalten (18a-18f, 18_{I}-18_{III}) von der Faltenhöhe (h) her in einzelne Gruppen (I, II) mit jeweils mehreren abschnittsweise nebeneinanderliegenden Filterfalten (18_{I}, 18_{II}) jeweils einer gemeinsamen Faltenhöhe (hₘₐₓ, hₘᵢₙ) unterteilt sind, **dadurch gekennzeichnet,**
**dass** zwischen zwei benachbarten Filterfalten (18f, 18a; 18_{II}, 18_{I}) unterschiedlicher Gruppen (I, II) Filterfalten (18b-18e; 18_{III}) mindestens einer weiteren dritten Gruppe (III) angeordnet sind;
**dass** die der dritten Gruppe (III) zugeordneten Filterfalten (18b-18e, 18_{III}) in der Art einer Kurvenbildung voneinander verschiedene Faltenhöhen, die einen Übergang zwischen den Faltenhöhen (hₘₐₓ, hₘᵢₙ) der beiden benachbarten Gruppen (I, II) herstellt, aufweisen; und dass entweder
der äußere Mantelkörper (11) eine kreisförmige Querschnittsform und der innere Mantelkörper (12) eine durch ein konvexes Polygon gegebene Querschnittsform aufweist,
oder, umgekehrt,
der innere Mantelkörper (12) eine kreisförmige Querschnittsform und der äußere Mantelkörper (11) eine durch ein konvexes Polygon gegebene Querschnittsform aufweist.

2. Filterelement nach Anspruch 1, **dadurch gekennzeichnet, dass** die Faltenhöhe der der dritten Gruppe (III) zugeordneten Filterfalten (18b-18e, 18_{III}) jeweils einen kontinuierlichen Übergang zwischen den Faltenhöhen (hₘₐₓ, hₘᵢₙ) der jeweils benachbarten Gruppen (I, II) herstellt.

3. Filterelement nach Anspruch 2, **dadurch gekennzeichnet, dass** der jeweilige Übergang wellen- und/oder sinusförmig ausgebildet ist.

4. Filterelement nach einem der vorhergehenden Ansprüche, **dadurch gekennzeichnet, dass** entlang der Filterbahn (10) nacheinander wechselnd nebeneinanderliegende Filterfalten (18f, 18_{I}) der ersten Gruppe (I) mit einer ersten Faltenhöhe (hₘₐₓ) und nebeneinanderliegende Filterfalten (18a, 18_{II}) der zweiten Gruppe (II) mit einer zweiten Faltenhöhe (hₘᵢₙ) angeordnet sind, zwischen denen jeweils nebeneinanderliegende Filterfalten (18b-18e, 18_{III}) der dritten Gruppe (III) angeordnet sind.

5. Filterelement nach Anspruch 4, **dadurch gekennzeichnet, dass** die Faltenhöhe entlang der Filterfalten (18b-18e, 18_{III}) der dritten Gruppe (III) jeweils abwechselnd von der ersten Filterhöhe (hₘₐₓ) zur zweiten Filterhöhe (hₘᵢₙ) und von der zweiten Filterhöhe (hₘᵢₙ) zur ersten Filterhöhe (hₘₐₓ) übergeht.

6. Filterelement nach einem der vorhergehenden Ansprüche, **dadurch gekennzeichnet, dass** die Filterfalten (18a-18f, 18_{I}-18_{III}) zumindest einer Gruppe (I-III) abschnittsweise nebeneinanderliegend entlang der Filterbahn (10) angeordnet sind und dass die Gruppen (I-III) jeweils die gleiche Anzahl an Filterfalten (18a-18f, 18_{I}-18_{III}) aufweisen.

7. Filterelement nach einem der vorhergehenden Ansprüche, **dadurch gekennzeichnet, dass** die Filterfalten (18a-18f, 18_{I}-18_{III}) entlang der Filterbahn (10) einem periodischen Verlauf folgend, vorzugsweise mit einer Periode (f) von 15 bis 20 Filterfalten, angeordnet sind.

8. Filterelement nach einem der vorhergehenden Ansprüche, **dadurch gekennzeichnet, dass** das konvexe Polygon ein Reuleaux-Polygon ist.

9. Filterelement nach einem der vorhergehenden Ansprüche, **dadurch gekennzeichnet, dass** die Filterfalten (18a-18f, 18_{I}-18_{III}) im Querschnitt zumindest teilweise zick-zack-, wellen- und/oder sichelförmig ausgebildet sind.

## Claims

1. Filter element (1) with at least one inner (12) and one outer casing body (11) of which at least one casing body (12) has a cross-sectional shape deviating from a circular shape and which have contact surfaces (20, 21) directed towards each other for resting on substantially all filter pleats (18a-18f, 18_{I}-18_{III}) of a pleated filter web (10) as part of the filter element (1), wherein the filter pleats (18a-18f, 18_{I}-18_{III}) are divided in terms of the pleat height (h) into individual groups (I, II) each having a plurality of filter pleats (18_{I}, 18_{II}) adjoining each other in sections and in each case of a common pleat height (hₘₐₓ, hₘᵢₙ), **characterised in that**
filter pleats (18b-18e; 18_{III}) of at least one further third group (III) are arranged between two adjacent filter pleats (18f, 18a; 18_{II}, 18_{I}) of different groups (I, II);
**in that** filter pleats (18b-18e, 18_{III}) assigned to the third group (III) have pleat heights which differ from each other in the manner of a curve formation which produces a transition between the pleat heights (hₘₐₓ, hₘᵢₙ) of the two adjacent groups (I, II); and
**in that** either
the outer casing body (11) has a circular cross-sectional shape and the inner casing body (12) has a cross-sectional shape dictated by a convex polygon,
or, conversely,
the inner casing body (12) has a circular cross-sectional shape and the outer casing body (11) has a cross-sectional shape dictated by a convex polygon.

2. Filter element according to claim 1, **characterised in that** the pleat height of the filter pleats (18b-18e, 18_{III}) assigned to the third group (III) produces a continuous transition in each case between the pleat heights (hₘₐₓ, hₘᵢₙ) of the respectively adjacent groups (I, II).

3. Filter element according to claim 2, **characterised in that** the transition is wave-shaped and/or sinusoidal in each case.

4. Filter element according to one of the preceding claims, **characterised in that** adjoining filter pleats (18f, 18_{I}) of the first group (I) having a first pleat height (hₘₐₓ) and adjoining filter pleats (18a, 18_{II}) of the second group (II) having a second pleat height (hₘᵢₙ), between which adjoining filter pleats (18b-18e, 18_{III}) of the third group (III) are respectively arranged, are disposed alternately one after another along the filter web (10).

5. Filter element according to claim 4, **characterised in that** the pleat height along the filter pleats (18b-18e, 18_{III}) of the third group (III) alternately transitions in each case from the first filter height (hₘₐₓ) to the second filter height (hₘᵢₙ) and from the second filter height (hₘᵢₙ) to the first filter height (hₘₐₓ) .

6. Filter element according to one of the preceding claims, **characterised in that** the filter pleats (18a-18f, 18_{I}-18_{III}) of at least one group (I-III) are arranged in sections adjoining each other along the filter web (10) and **in that** the groups (I-III) each have the same number of filter pleats (18a-18f, 18_{I}-18_{III}).

7. Filter element according to one of the preceding claims, **characterised in that** the filter pleats (18a-18f, 18_{I}-18_{III}) are arranged along the filter web (10) following a cyclic course, preferably with a cycle (f) of 15 to 20 filter pleats.

8. Filter element according to one of the preceding claims, **characterised in that** the convex polygon is a Reuleaux polygon.

9. Filter element according to one of the preceding claims, **characterised in that** the filter pleats (18a-18f, 18_{I}-18_{III}) are at least partially zigzag, wave-shaped and/or sickle-shaped in cross-section.

## Revendications

1. Elément (1) de filtre comprenant au moins un corps (12) d'enveloppe intérieur et un corps (11) d'enveloppe extérieur, dont au moins un corps (12) d'enveloppe a une forme de section transversale s'écartant d'une forme circulaire et qui ont des surfaces (20, 21) de contact tournées l'une vers l'autre pour le contact sensiblement de tous les plis (18a - 18f, 18_{I} - 18_{III}) de filtre d'une bande (10) de filtre plissée comme partie de l'élément (1) de filtre, dans lequel les plis (18a - 18f, 18_{I} - 18_{III}) de filtre sont subdivisés à partir de la hauteur (h) de pli en des groupes (I, II) individuels ayant respectivement plusieurs plis (18_{I} - 18_{II}) de filtre disposés les uns à côté des autres par endroits respectivement d'une hauteur (hₘₐₓ, hₘᵢₙ) de pli commune, **caractérisé,**
**en ce que** des plis (18b - 18e ; 18_{III}) de filtre d'au moins un autre troisième groupe (III) sont disposés entre deux plis (18f, 18a ; 18_{II} - 18_{I}) de filtre voisins de groupes (I, II) différents ;
**en ce que**
les plis (18b - 18e ; 18_{III}) de filtre associés au troisième groupe (III) ont, à la manière d'une formation d'une courbe, des hauteurs de pli différentes les unes des autres, qui produisent une transition entre les hauteurs (hₘₐₓ, hₘᵢₙ) de pli communes des deux groupes (I, II) voisins ; et
**en ce que** ou bien
le corps (11) d'enveloppe extérieur a une forme de section transversale circulaire et le corps (12) d'enveloppe intérieur a une forme de section transversale donnée par un polygone convexe,
ou inversement
le corps (12) d'enveloppe intérieur a une forme de section transversale circulaire et le corps (11) d'enveloppe extérieur a une forme de section transversale donnée par un polygone convexe.

2. Elément de filtre suivant la revendication 1, **caractérisé en ce que** la hauteur des plis (18b - 18e, 18_{III}) de filtre associés au troisième groupe (III) produit respectivement une transition continue entre les hauteurs (hₘₐₓ, hₘᵢₙ) de plis des groupes (I, II) voisins respectifs.

3. Elément de filtre suivant la revendication 2, **caractérisé en ce que** la transition respective est de constitution ondulée et/ou sinueuse.

4. Elément de filtre suivant l'une des revendications précédentes, **caractérisé en ce que** des plis (18f, 18_{I}) de filtre voisins les uns des autres et alternant les uns après les autres le long de la bande (10) de filtre du premier groupe (I), sont disposés en ayant une première hauteur (hₘₐₓ) de plis et des plis (18a - 18_{II}) de filtre les uns à côté des autres du deuxième groupe (II) sont disposés en ayant une deuxième hauteur (hₘᵢₙ) de plis, entre lesquels sont disposés respectivement des plis (18b - 18e, 18_{III}) de filtre disposés les uns à côté des autres du troisième groupe (III).

5. Elément de filtre suivant l'une la revendication 4, **caractérisé en ce que** la hauteur des plis, le long des plis (18b - 18e, 18_{III}) de filtre du troisième groupe (III), se transforme respectivement en alternance de la première hauteur (hₘₐₓ) de filtre en la deuxième hauteur (hₘᵢₙ) de filtre et de la deuxième hauteur (hₘᵢₙ) de filtre en la première hauteur (hₘₐₓ) de filtre.

6. Elément de filtre suivant l'une des revendications précédentes, **caractérisé en ce que** les plis (18a - 18f ; 18_{I} - 18_{III}) de filtre au moins d'un groupe (I - III) sont disposés les uns à côté des autres au moins par endroits, le long de la bande (10) de filtre et **en ce que** les groupes (I - III) ont respectivement le même nombre de plis (18a - 18f ; 18_{I} - 18_{III}) de filtre.

7. Elément de filtre suivant l'une des revendications précédentes, **caractérisé en ce que** les plis (18a - 18f ; 18_{I} - 18_{III}) de filtre sont disposés le long de la bande (10) de filtre suivant un tracé périodique, en ayant de préférence une période (f) de 15 à 20 plis de filtre.

8. Elément de filtre suivant l'une des revendications précédentes, **caractérisé en ce que** le polygone convexe est un polygone de Reuleaux.

9. Elément de filtre suivant l'une des revendications précédentes, **caractérisé en ce que** les plis (18a - 18f ; 18_{I} - 18_{III}) de filtre sont constitués en section transversale au moins en partie en forme de zigzag, en étant ondulé et/ou en forme de faucille.
